# EUROPEAN PATENT APPLICATION

(11) **EP 4 708 166 A1**
(43) Date of publication of application: **11.03.2026**
(21) Application number: 25200681.2
(22) Date of filing: 05.09.2025
(51) Int. Cl.: G06Q 10/08, G06Q 10/083, G06Q 10/087, G06V 10/20

(54) **SYSTEMS AND METHODS FOR PROVIDING LOGISITICAL STRUCTURE AND INVENTORIES DURING STORAGE AND MOVEMENT OF DISPARATE PHYSICAL ITEMS**

(30) Priority: 06.09.2024 US 202463691355 P
(71) Applicant: Cadogan Tate Group Limited, London NW10 7NP (GB)
(72) Inventor: Isitt, Mark, London, NW10 7NP UK 301 (GB)
(74) Representative: Kelly, Edward

(57) **Abstract**

Systems and methods that apply generative artificial intelligence (AI) processes to facilitate the inventorying and moving of physical items. In certain embodiments crew members of a moving team are provided with mobile devices running an application to take an image of an item to be moved. Once the image is taken, the systems and methods initiate a generative artificial intelligence process to provide a human readable description of the item. This description and the image can be built into a file that is stored in an item database to create a visual catalog for a user. Room layout images can be captured and stored as well. The visual catalog provides a real time record of items being moved and the cartons holding the items. A portal into the visual database allows a client to deliver instructions where to locate or store an item being moved and the system can get those instructions to the crew in realtime.

## Description

### RELATED APPLICATIONS

This application claims priority and the benefit under 35 U.S.C. 119(e) of U.S. Provisional Patent Application Serial No. 63/691,355 filed September 6, 2024, entitled "SYSTEMS AND METHODS FOR PROVIDING LOGISITICAL STRUCTURE AND INVENTORIES DURING STORAGE AND MOVEMENT OF DISPARATE PHYSICAL ITEMS". The above cited application is herein incorporated by reference in its entirety.

### Background

Physically moving items from one location to another becomes a large and complex task when the number of items being moved is large, there is a logical structure associated with the location of each item being moved, and a substantial period of time separates the positioning of items in one location and the later positioning of items in another location. Adding to the complexity is that the items being moved from one physical location to a second different physical location may be only a subset of the items being moved.

The complexity of moving a large number of items from one location to another has been recognized and engineers have developed systems and methods for improving the efficiency and effectiveness of moving items from one location to another. One such example is the move connect application and platform provided by the Moveware Company under the trade name Mobi. Mobi is an application of the type that may be run on a handheld device such as a mobile phone. Mobi allows personnel such as surveyors and crew members to create inventories of items being moved from one location. It can generate packaging lists as well as manage resources employed for moving items from one location to another. A similar product is the VOXME application provided by Voxme Software Inc. VOXME also can run on a user's mobile phone and VOXME can create an entry for an item being moved where that entry can give information about the name of the item, the type of item that it is, the condition it is in and other information. These systems can include photographs of the item being moved and are helpful for allowing crew members to effectively move items from one location to another.

However, logistical responsibility of moving items from one location to another location resides not with the surveys or the crew members, but with the owners of the items being moved. Ultimately, it is the owners that need control over the moving process and the logistics of that process, in order to efficiently move items, or subset of items, from one location to another location.

As such there remains a need in the art for systems and methods that more efficiently allow a user, such as the owner of items being moved, to move items from one location to another location.

### SUMMARY

The systems and methods described herein include, among other things, intelligent inventory control systems for managing the logistical structure and inventories during the storing and movement of disparate physical items from a first location to a second location wherein the first location is typically different from the second location. In certain embodiments, the systems described herein provide centralized control and logistical support for organizing the packing and moving and redeploying of items. Further, in typical embodiments, the system provides a collaborative portal that allows a party, typically the owner or the manager of the move, to have real time access of the items being packed, the crates/cartons carrying the items being packed, and control over redeployment instructions that allow the third party, again typically the owner or the manager, to determine which of the packed items will be deployed in the second location and where those items shall specifically be located at the second location. Typically, the collaborative portal is a web-based application that can be deployed at least in part on a mobile device such as a cell phone or a laptop computer or some other similar device. The user, typically the owner, can log on through the collaborative portal and see a real time inventory of all items being moved from the first location to the second location. Typically for each item there is a description of the item provided and optionally a description of the condition of the item. Further the location of the item at the first location, such as a marble statue in a living room designated as living room A2, is noted in a file associated with the marble statue item being moved. The collaborative portal allows the user to instruct a crew to move the item to a particular location, such as a living room in a different home, and provide instructions to the moving crew to deploy the respective item at the location indicated by the owner through use of the collaborative portal.

In a further aspect, it will be understood that in typical embodiments, the systems and methods described herein apply generative artificial intelligence (AI) processes to facilitate the intelligent inventorying of items that are at a first location. In particular, in certain embodiments crew members of a moving team are provided with mobile devices, typically mobile phones or tables. The phones/tablets are capable of running an application of the type of application that is commonly run on mobile phones. The mobile phone will have a display screen that is typically a touch screen and a camera. A crew member can use the mobile app and the camera on the phone to take an image of an item. Once the image is taken, the systems and methods described herein will typically apply a generative artificial intelligence process to identify and provide a description of the item in the photo. This description and the photo can be built into a file that is stored in an item database which is creating a visual catalog for a user. In one embodiment, the generative AI process applied to the photograph of the item is a third-party cloud based system such as the services offered by third party companies such as the Amazon Corporation, or Microsoft Corporation. These third party generative AI systems can employ a visual based large language model to analyze a photograph image of an item captured on the cell phone of the crew member through the mobile app described herein and generate for that photograph image a description of the item that appears within the photograph. The process described herein collects those descriptions and the photographs of the item and creates a visual catalog and the visual catalog may be presented, typically through a collaborative portal, to a third party such as the owner of the items.

In further embodiments, the systems and methods described herein allow a crew member to employ the phone and an app of the type described herein to take an image of the layout of a particular room. The layout can show the relative positioning of items in the room prior to or during the moving process. Thus, the layout may represent the floor plan and position of furniture, paintings, and other items in a room at the first location. Item image and identification information created for the visual catalog may also include a reference to the respective floor plan that included that item at the first location. In this way, the owner or user of the system, can see the original location and positioning of the item at the first location. The owner or user may employ that information to determine the appropriate location of the item at a second different location. That information can be entered by the user or owner through the collaborative portal and the systems described herein can build a set of instructions that can be employed by the moving crew to ensure that the item is located at the specific location selected by the user owner at the second location for that item.

In one aspect, the systems and methods described herein include an inventory control system for managing the storing and movement of disparate physical items, comprising an application of the type capable of running on a mobile device having a camera and a user interface that can be accessed by the application. The application is configured to collect from the camera an image captured by the camera and depicting an item being moved, and deliver the image to a generative artificial intelligence (AI) process for analyzing the image to create a text description of the image wherein that text description provides a human readable representation of the item. The system also includes a database system for building a visual database from the images and generated text descriptions of the items; and a portal capable of accessing the visual database to provide a user with information about the items being moved.

Optionally, the application is configured to initiate an inventory entry process for having the database system create a record in the visual database for the item being moved upon capture of the image of the item. As such, the system in some embodiments starts the inventory process once an image of an item is taken by a user, typically a member of the moving crew. The capture of the image of the item to be moved can initiate the process of applying a generative AI process for creating a human readable description of the image. Typically, the human readable description is text and typically it the description is a succinct description of the item being moved. For example, an image of a blue vase may be captured and this can initiate a process wherein a generative AI process is applied to the image to generate text describing the vase. The text may be for example a text string noting "blue vase with image". In some optional embodiments, the text description may include a description of any damage that the generative AI process was able to identify from the image, such as "having a large crack toward the center of the vase." Typically, the crew member is running the application on a mobile phone, a tablet computer or a laptop computer, but most often a mobile phone as these are ubiquitous among crew teams. That act of an initial image is enough for the AI to title, describe, locate, measure, and assess the condition of one or more objects. This "photo-first" approach simplifies later data capture and minimizes operator input, whether used by professional movers or directly by clients. Further, the immediate initiation of the inventory process allows for real time development of a database of the items being moved. Optionally, the application is further configured to apply a generative AI process to create a text description of a physical condition of the item being moved. Further optionally, the application is further configured to generate a room layout file representing the layout of a room where the item being moved is located. Typically this is done by instructing the crew member to take an image of the room, either in sections or panoramic, and a generative AI process can build a room layout image and file storing in the visual database.

Optionally, the application is further configured to record light exposure for the original location of the item being moved. Typically, the portal is configured to allow selecting a location in a second room for placing the item being moved. Further, it may be that the application is further configured to generate a computer readable code for use as a label for a carton and wherein the computer readable link includes a link to the visual database to allow a user to follow the link to access images of the items in the carton.

In another aspect, the systems and methods described herein include an inventory control method for managing the storing and movement of disparate physical items. Such methods typically include providing a computer application of the type capable of running on a mobile device having a camera and a user interface that can be accessed by the application. The application may be configured to collect from the camera an image captured by the camera and depicting an item being moved, and deliver the image to a generative artificial intelligence (AI) process for analyzing the image to create a text description of the image wherein that text description provides a human readable representation of the item. The method may build a visual database from the images and generated text descriptions of the items and
provide a portal capable of accessing the visual database to provide a user with information about the items being moved.

Optionally, the inventory control method initiates an inventory entry process for creating a record in the visual database for the item being moved upon capture of the image of the item.

Typically, the inventory control method has the application apply a generative AI process to create a text description of a physical condition of the item being moved. Optionally, the inventory control method may generate a room layout file representing the layout of a room where the item being moved is located. Further optionally, the inventory control method may record light exposure for the original location of the item being moved.

Typically, the inventory control method allows a user to use the portal to select a location in a second room for placing the item being moved. Further, the inventory control method also typically generates a computer readable code for use as a label for a carton and wherein the computer readable link includes a link to the visual database to allow a user to follow the link to access images of the items in the carton.

Although the examples described herein are primarily related to moving items from one location to another different location, it will be understood by those of skill in the art that these systems can be employed for providing logistical control and organization during storage procedures, such as long term storage of fine art or other items, and can be used for museum management, insurance inventories, construction project management where items are being removed from a building prior to building renovation, and for other applications where control over the physical items is required and where the system benefits from understanding the location and condition of the items.

### BRIEF DESCRIPTION OF DRAWINGS

The systems and methods described herein are set forth in the appended claims. However, for purpose of explanation, several embodiments are set forth in the following figures.
Fig. 1 depicts one embodiment of the systems described herein.
Fig. 2 depicts in more detail an example of an item being captured by a member of the moving crew during a move.
Fig 3 depicts an example of a generative AI process having generated identification information for an item, as well as optional condition information.
Figure 4 depicts an example of a layout of a room at a first location.
Figure 5 depicts an example of the systems and methods described herein capturing the layout of a room such as the layout depicted in Figure 4 and building a layout database for use by the collaborative portal.
Figure 6 depicts an example of the systems and methods described herein creating a packing inventory by photography.
Figure 7 depicts an example of a user employing the collaborative portal to send a request to an account manager for making decisions on whether to have items shipped, installed, refurbished, sent to auction, or for some other purpose.
Figure 8 depicts an archived installation process wherein the moving crew photographs an area to archive its layout. The layout information is stored and may be employed to recreate the layout of the first location.
Figure 9 depicts a process for generating moving instructions allowing a user to plan a move using the collaborative portal by generating instructions to the moving crew about specific rooms and areas to place items.
Figure 10 depicts a system and method for visual cartoon views wherein the process allows a user to digitally view the contents of each carton or crate without unpacking the physical items from the carton/crate providing a virtual X-ray of the cartons/crates.

### DETAILED DESCRIPTION

In the following description, certain embodiments of systems and methods for inventory control are disclosed and described and numerous details are set forth for purpose of explanation of such systems and methods. In particular, disclosed herein are, among other things, inventory control systems and methods that include, in a typical embodiment, a mobile application of the type that can run on a mobile phone, tablet, or small portable computer, in each case of this embodiment, the device having a camera. The mobile application can execute a program that allows a user to capture a picture of an item to be moved. The capture of the image initiates an inventory control process. In such a process an inventory record of the item, typically including its location from which it is being moved, and a text description of the item, are generated by a generative AI program of the type capable of analyzing an image such as the captured photograph of the item to be moved. The database system can include a database storing inventory records of the items being moved. Additionally, a portal may be provided to a third party, such as the owner of the items being moved, that allows the third party to interact with the inventory records for setting up instructions such as instructions as to where to locate the item being moved in its new location, and other similar instructions. The person that is skilled the art will understand that these are representative embodiments of the innovative systems and methods described herein and are not an exhaustive list of such systems and methods. Moreover, one of ordinary skill in the art will realize that the embodiments described herein may be practiced without the use of these specific details. Further, for clarity, well-known structures and devices are shown in block diagram form to not obscure the description with unnecessary detail.

In one embodiment, the systems and methods described herein include an intelligent inventory control system for managing the logistical structure and organization of storing and moving items, comprising an application of the type capable of running on a mobile device such as a mobile phone wherein the mobile phone includes a camera and a user interface that can be accessed by the application; the application configured to operate the camera to take an image of an item being moved, and configured to deliver the image to a generative AI process capable of analyzing the image to create a text description of the image wherein that text description provides a human readable representation of the item, and optionally the generative AI process creates a text description of the physical condition of the item; a database system for building a visual database from images and generative AI generated descriptions of the items; and a collaborative portal capable of accessing the visual database to provide a user with information about the items being moved, optionally the condition of those items and optionally the location within the layout of the first location from which the item was stored.

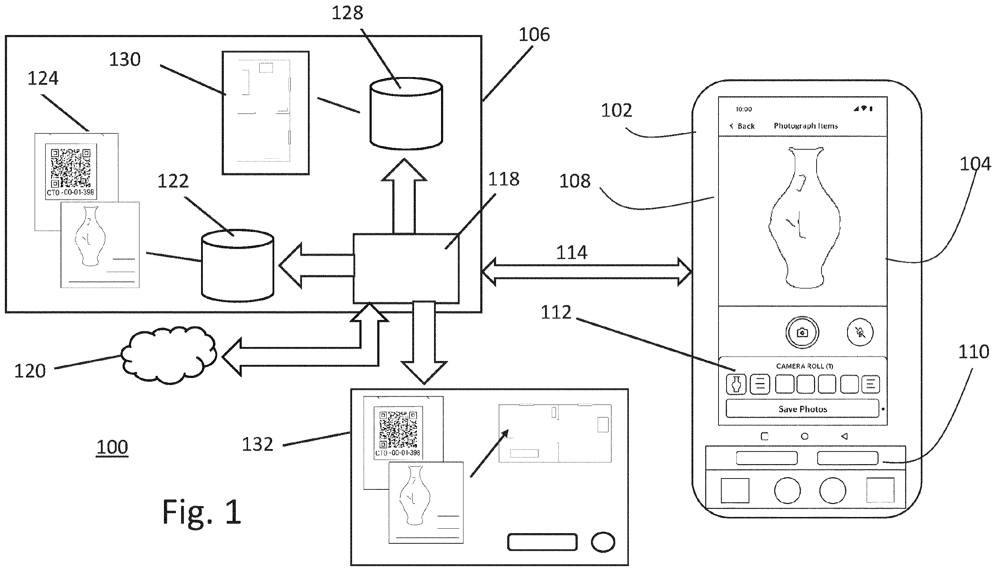

Figure 1 depicts one example of an intelligent inventory control system that can be used for managing logistical structure and organization of storing and moving items. In particular, Figure 1 depicts a system 100 that includes a mobile device 102 which can include an application program 104 that can be a client application running on a mobile phone of the type typically used for providing application services through a mobile phone or other mobile device. The mobile application 104 can communicate across a bidirectional path 114 and for example transfer image data to a server process 106, as well as other data to the server process 106. The server process 106 can be a server process that is used in a client server application for receiving information from a client-side application, such as the depicted application 104, and processing that information on a set of servers allocated for this client server application.

In particular, Figure 1 depicts a mobile device 102, an application program 104, a captured image 108 of an item being inventoried for movement from one location to another location, a camera roll 112 showing a series of images captured by the application 104, and a user interface 110 of the type commonly used with mobile devices for operating an application program such as the client application 104 depicted in Figure 1.

Figure 1 further depicts a server-side application 106. The server-side application 106 includes a generative artificial intelligence identification process 118 that receives information such as the image file of the captured image 108 across the communication path 114. The server application 106 further includes a communication interface to a third party generative AI image identification process 120, a visual database 122 storing files including images, generated description of the images and optionally information of the condition of the item being moved and optionally labels and codes such as the depicted QR code 124, a layout database 128 that includes data files 130 representing the layout of different rooms or other characteristics of the physical surroundings of the items that are being moved from one location to a second location.

The mobile device 102 can be any suitable mobile device and typically will be a mobile phone. The mobile phone will have a camera and a microprocessor of the type capable of running applications. Usually, the device will have a touch screen display and can depict and present images to the users. A user interface such as the user interface 110 can be provided to allow the user to manipulate the image and the application as needed. In the systems and methods described herein the application program 104 and the server 106 cooperate together to allow a crew member, typically person that is a member of a moving crew, to use the application program to take an image of an item being moved. In Figure 1, a vase is displayed in the image file 108. In this example the user, likely a member of the moving crew, holds the camera of the phone toward the vase and collects an image that becomes image file 108. In preferred embodiments, the moving crew's work is done, it is not required that they enter a description or text information about the item. Instead, in the systems and methods described herein the application 104 packages the image data optionally with GPS data about the location of the information and information about the layout of the room, and delivers that information via communication path 114, which is typically the cellular network, to the server side application 106.

In the systems described herein the server-side application 106 employs the generative AI identification process 118 to analyze the image 108 and generate a text description of the image. For the example shown in Figure 1 the generative AI process 118 may generate a text description along the lines of "a blue vase having a design thereon". In this way, the crew member merely needs to take an image of the item being inventoried, and the systems described herein will automatically generate a useful human readable text description and identification of the item.

As further depicted in Figure 1, the server application 106 can collect all the image information being generated by the crew members taking images of the items and collect the generated human readable text identification information created by the generative identification processor 118 and develop an item database 122 that acts as a visual catalog of all the items being moved. Figure 1 depicts an example of the type of information stored within the item database 122, that is the visual catalog. As shown, a representative file 124 can include the image that was captured by the crew member, text that represents the human readable text generated by the generative AI process 118, and optionally information about where the item was located in the house or building or museum from where the item was actually taken. Further as depicted in Figure 1, an optional representation of a type commonly used when moving items or storing items, such as in this case the depicted QR code, but other types of labels and packaging information can be used, is generated and stored within the visual database 122. This information in the QR code can include information about the crate/carton or other package in which the item is eventually located for the purpose of moving the item from a first location to a second location or for storing the item. The QR code, may be imaged by the application 104, as is commonly done with QR codes, UPC codes and other types of visual codes, and information can be provided to the user indicating in which crate the item actually is stored. This can allow a user reviewing the visual database 122 to collect information about where the item is currently created or packaged.

Figure 1 further depicts that layout information can be captured by the mobile application 104 and delivered via the path 114 to the server-side application 106. The server-side application 106 can generate a floor plan database 128 that keeps layout information about the physical layout of the different rooms from which items were taken during the move. An example of such a file stored within the database 128 and having layout information is depicted in Figure 1 as the layout file 130.

Figure 1 further depicts a collaborative portal 132. The collaborative portal 132 can be an application that could be run on a mobile device or a desktop or through any of the devices commonly used from running computer applications and can allow a user, typically the owner, to have access to the information stored in the visual database 122. That information can include the different items that were actually stored which can be searched by the human readable representation generated by the generative AI process 118, as well as information about the condition of the item, where the item was located in the original layout file 130, information about the crates in which the item is stored, such as the QR code, and other similar information. In this way, a user accessing portal 130 can have real time control over the items being collected and crated at one location. As will be described in more detail herein, the user can also add to information in the visual database 122 wherein that added information includes instructions for where to locate the item in a second different location. In this way the user can have real time controls over the items being packaged at one location and can set up instructions that can be followed by the crew and accessed through the application 104 so that the crew have layout information as to the second location and where that item, in this case the blue vase, should be located at that second location.

In the embodiment depicted in Figure 1, the generative AI identification process 118 has a bidirectional interface to a service 120. The service 120 can be any suitable service that provides generative AI information from images. Such services are offered by third parties such as the Amazon corporation of Seattle WA, the Microsoft corporation of Redmond WA, and other such companies. These services can be accessed by processes such as the generative AI process 118 and used to analyze an image and generate human readable text that is representative of the content of the image. For example, the OPENAI company provides GPT-4o, GPT-4o mini, and GPT-4 Turbo, all of which have vision capabilities, meaning the models can take in images and answer questions about them. Historically, language model systems have been limited by taking in a single input modality, text. Images are made available to the model in two main ways: by passing a link to the image or by passing the base64 encoded image directly in the request. Images can be passed in the user messages. In any case, the third-party models are prepared to receive images and answer questions about their content. The systems and methods described herein can apply such models and systems. So, for example depicted in Figure 1, the generative AI process 118 may receive the image 108 from the application 104 and pass that image 108 or a formatted version of that image 108 to the third-party service 120. The third-party service 120 can process the image 108 and generate human readable text and provide that human readable text back to the generative AI process 118 which that process 118 can use for generating the files 124 for the visual database 122. In other embodiments, the generative AI process 118 will include its own image model capable of analyzing aspects of the collected image 108 and from them generating using a large language model and identification of the content of that image, such as "a blue vase with a decoration thereon".

Those of skill in the art will understand that the generative AI processes, whether secured from third parties or otherwise, may be improved by fine tuning. For example, a base model for generating identification information from captured image data of items being moved may be selected. Once the base model is selected, an optimization algorithm is chosen and some metrics are set to compare model improvements. Optionally, the process may optimize, at least in part, by using real-live human feedback (RLHF). In any case, a generative AI identification process that is tuned to identify the types of items one tends to move or store will be developed and may be employed, optionally, for the generative AI process as opposed to a more standard generative AI process.

Although Fig. 1 graphically depicts the system 100 as functional block elements, it will be apparent to one of ordinary skill in the art that these elements can be realized as computer programs or portions of computer programs that are capable of running on the depicted server platform and mobile device to configure them into a system as described herein. Thus, the system 100 can be realized, in part, as a software component operating on a data processing system. In that embodiment, the system 100 can be implemented as a C language computer program, or a computer program written in any high-level language including C++, Fortran, Java or BASIC.

The depicted databases in sever side application 106 can be any suitable database system, including the commercially available Microsoft Access database, and can be a local or distributed database system. The design and development of suitable database systems are described in McGovern et al., A Guide to Sybase and SQL Server, Addison-Wesley (1993).

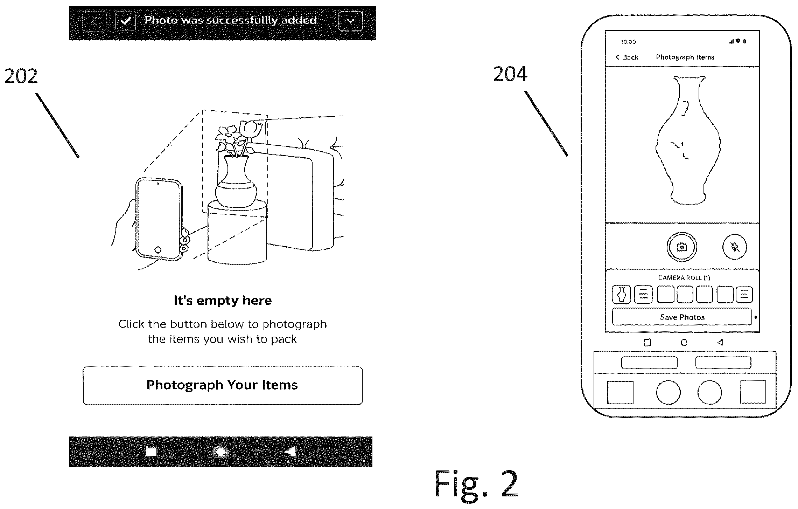

Figure 2 depicts in more detail the process by which a user, typically a crew member of the moving team, will use the application on their mobile phone to take an image of an item, in this example also a vase but this one having flowers in it. The camera will generate an image of that vase on the phone of the user shown in this case as the image 204. The crew member then can press a button on the user interface and send the image information off to the server side application 106 for the server to process as discussed above with reference to Figure 1. As shown in Figure 2, the application interface 202 can provide a graphic instruction, which in this case is an image of a person holding a phone so that the camera of the phone frames the item to be moved within the image being captured. An instruction bar provides a simple text instruction to "Photograph Your Items." Once photographed, the system 100 can initiate the inventory process. As depicted in Figure 2 and image capture 204 takes place through the application. The active image capture can start the inventory process and as will be described herein, in some embodiments, AI process 118 is applied and used in real time to caption and describe each item, and the content of each packing carton, all from the image captured and the process of image capture. The image of the item is captured as depicted in element 204. As described above with reference to Figure 1, the AI system 118 can generate a text description of the item in the image. In this case it may note that the item is a vase, and optionally note other information such as the color of the vase, patterns on the vase, or other information that can be descriptive of the item being moved. As also described above with reference to Figure 1, the process may also optionally cause the AI process 118 to generate information about the condition of the item in the photograph, such as whether it is chipped, or worn in some way, it may identify the location of the item being moved such as the room it is in and where within the room that it is positioned. Thus, in such embodiments the system 100 applies AI process 118 for item captioning, descriptions and condition reports. These reports may be stored in the layout file 130 and optionally presented alongside a visual catalog of items being moved such that there is a detailed description and optionally detailed condition reporting for items.

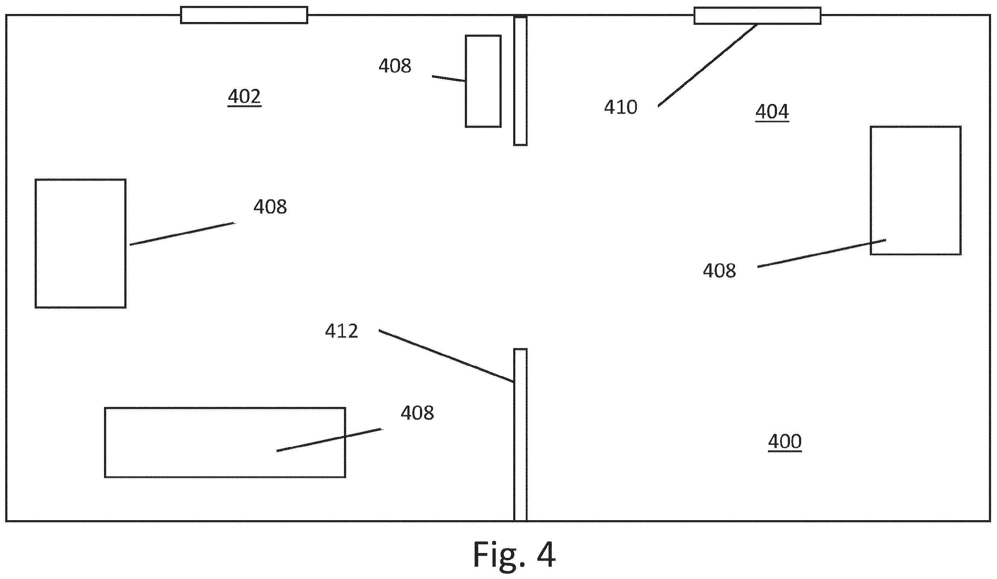

Optionally the application may also generate information about the lighting and exposure that is surrounding the item being moved in its current location. This may be most helpful when moving art. With art it may be that the location of the art within a room layout is based and selected largely due to lighting that a curator selects for proper exhibition of the art piece. As discussed below with reference to Figure 4, the room layout may be captured by image capture using the mobile device 102, and an AI generative process 118 for storing a representation of the layout, typically a line drawing or an AI generated overhead pan image of the room. In optional embodiments, the camera images may be analyzed by the AI generative process 118 to determine the lighting associated with an item being moved. Such as if the item is in a brightly lit location in comparison to other locations within the room layout, or has a northern exposure of light, and other similar lighting characteristics, any of which may be stored by the application described herein for subsequent recording Into the layout file 130 that is in association with an item being moved.

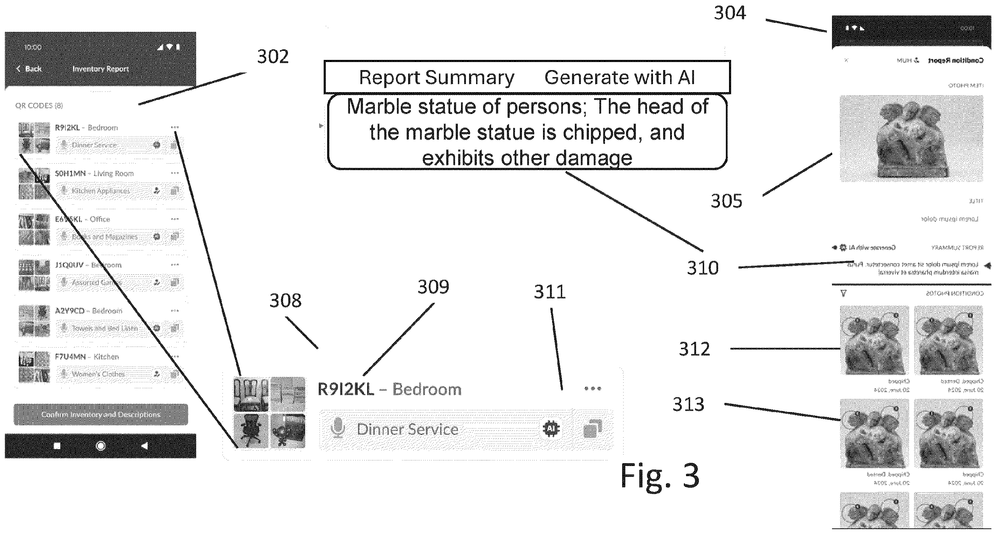

Figure 3 depicts in more detail examples of how the systems and methods described herein apply generative AI processes to caption an image of an item and provide descriptions and optionally condition reports. This information, as discussed above with reference to Figure 1, can be stored in the visual catalog 122 to provide a detailed description and optionally a detailed condition report for items that are being moved from one location to another. As depicted in Figure 3 there could be an inventory report 302 that gets generated. The inventory report 302 can include information about the different rooms and the items being moved from that room and create a file therein such as the depicted file 308. That file 308 (shown within the report 302 and in a magnified version 308 for ease of illustration) can include a code such as code 309, in this example give as R912KL- bedroom, representing a carton containing multiple items from the bedroom. Note this carton has a summary caption "Dinner Service" that itself was AI generated using the individual captions of in-turn AI generated items packed within that carton. Different items from that room can have different identifiers such as in this case "dinner service" which represents a dinner service that existed within the bedroom R912 KL at the time of the move. The inventory report 302 can be stored in the visual database 122 or at least within tables in the visual database and can be provided as an inventory report to a user through the collaborative portal 132. In this embodiment, each record presented in the report 302 of the application, such as record 308, may include a set of controls 311. The controls, in this case, indicate that the text description and location information was generated by the AI process and provides a UI control that the user can select to cause the images in this report 308 to expand to viewing by the user. As can be seen from the report 302, in some cases the text description may be generated by a person, and in this embodiment, the UI 311 will show an clip-art image of a person to indicate the text with human generated.

Figure 3 also shows an example of a report 304 that shows the image 305 that was captured of the item and a brief text description and identification 310 (the text 310 shown both in the report 304 and in a magnified version for ease of illustration) that was generated with the AI process 118, typically a generative AI process, in this case "marble statue of persons; Moved from living room A2". Optionally, the report 304 can include a condition report that can be generated that includes information such as the identification information 310 optionally including information such as "slight damage to one face in the statue", and other similar information. Images 312 captured of the item and which are worth identifying as possibly representing the condition of the item, at least as determined and expressed by the generative AI algorithm, can be optionally circled in the images 312 to show different areas of the item that may have some impact on the description of the condition. For example, the circled heads 313 of the statue shown in the images 312 may indicate locations where some damage was perceived by a human user to help the generative AI write a condition report, or rendered by the generative AI system that is generating a representation, in human readable form, of the condition of the marble statue. In this way, the systems and methods described herein are capable of applying generative AI to provide in real time captions and descriptions of each item and the content of each packing carton that is going to store these items doing so, in this embodiment, only from an image captured by the crew member at the site of the item.

Figure 4 depicts one example of a layout. As depicted in Figure 2, a crew member can take a picture of an item as well as an image of the layout of the room from which the item is being moved. Figure 4 depicts a representation of a layout file 130 that is generated by the generative AI process 118 and optionally stored in a database such as the floor plan database 128 depicted in Figure 1. Figure 4 is just an example of what can be captured for a layout, and it shows in this case a block diagram that depicts two parts of the room, 402 and 404, different items of furniture 408 located within the room, and optionally the location of walls or partial walls such as the depicted wall 412 and windows such as the depicted windows 410. Depiction of walls and windows can help one understand the lighting within a room such that if one wants to recreate the right lighting for an item such as a painting or an artistic vase one may be more sensitive to the lighting that was employed in the first location as opposed to merely the physical location of the item within the room. In this way the systems and methods described herein can capture layout information about different types of aesthetics that are relevant to the positioning of items in a new location, such as lighting, wall space, and other Similar information that may be used by the homeowner or a curator to find the proper location for a particular item.

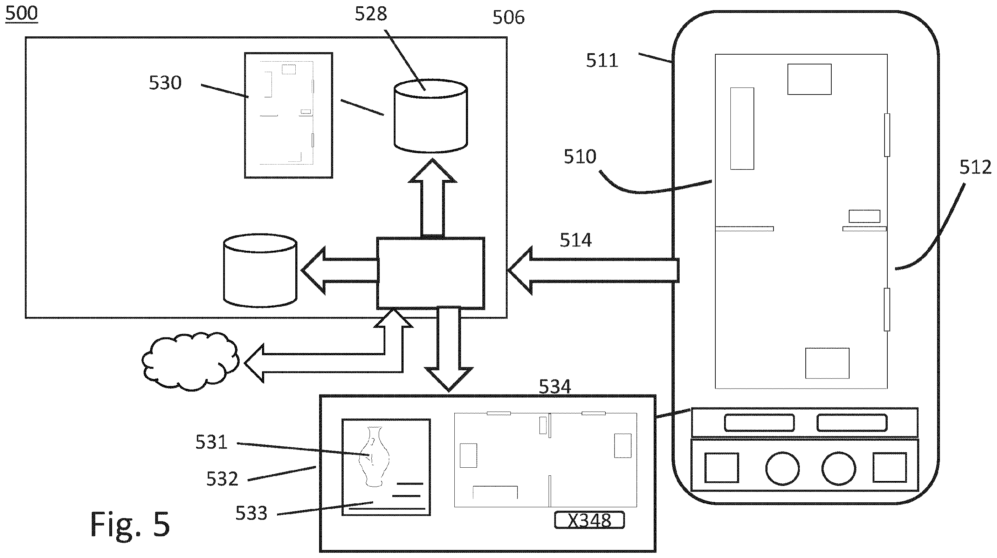

Figure 5 depicts a system 500 much like the system 100 depicted in Figure 1 and typically part of that system 100. Figure 5 highlights and shows in more detail that the application operating on the mobile phone can capture layout information. To this end Figure 5 depicts an application 512 running on a mobile phone 511 and capable of capturing layout information as a file such as the layout information 510. This can be an image of the room that is an actual graphical image taken by the camera or it can be a line rendering of the room generated by the application program based on an image captured by the camera on the mobile device 511, or might be a combination of the two. In any of the case layout information 510 is captured and passed via data path 514 to the server-side application 506. The server-side application 506 can take the layout information 510 and build a floor plan database 528 that includes floor plan files/information 530 representing the different layouts 510 captured by the application program 512. As further depicted in Figure 5 the collaborative portal 532 may be employed for getting item information from the visual database and getting the floor layout information and presenting that information to the user as an assembled image 534 presented on the display of the application. Typically, the display carrying the assembled image 534 is a display of a phone or computer used by the user as the user access inventory information from the database 528. The user can use this information as well as layout information from the new location to help identify the best location for an item being moved from a first location to a second different location. Additionally, the user, often the owner of the items, can use the portal 532 to find an item within the visual database and provide instructions for where that item should be located on a floor plan associated with a second different location. So, in this example, the user can identify the blue vase 531, typically by using the human readable description 533 "blue vase" provided by the generative AI process. The user can then provide an instruction that indicates that the blue vase 531 should be moved to room X348 in the new location and can identify a piece of furniture on which that vase should be positioned.

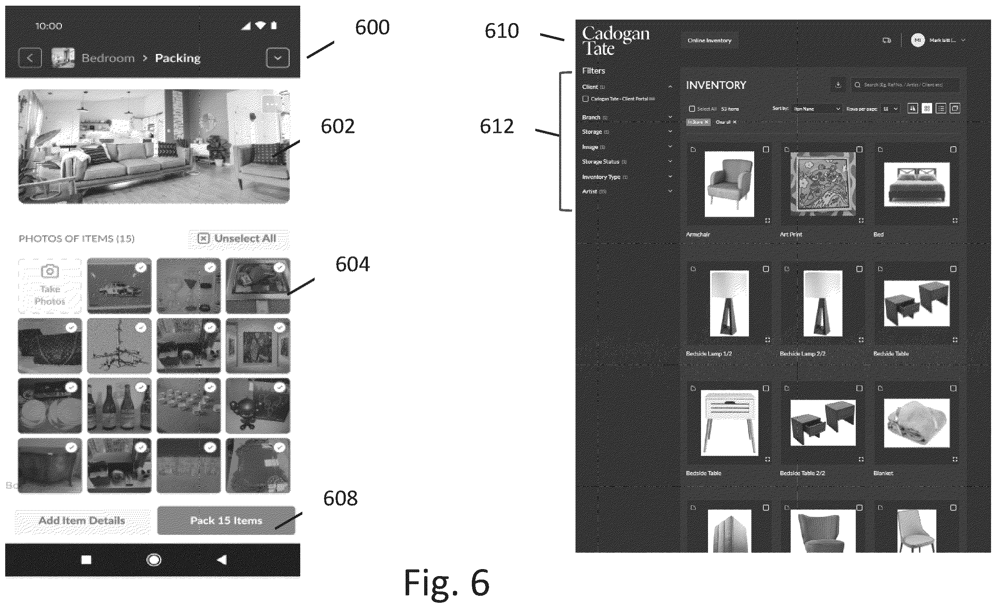

Figure 6 depicts a further aspect of the invention wherein the systems methods described herein can create packing inventory information by using the images/photography captured by the crew members using the application such as the mobile application 104 depicted in Figure 1. The systems and methods described herein will create a photographic inventory of the items and belongings while on location of a move without requiring a separate appointment ahead of time to collect that information. As discussed above, the generative AI process 118 will provide a human readable description of the item and create a visual database that can be used to track and visualize each item owner has anywhere and in real time typically. In this way a single photograph is enough to define an item being packed and no typing is required and real time updates of the packaged items can be given to the owner. Figure 6 depicts the packing information 600 that shows 15 items have been packed from a particular room. In particular, Figure 6 depicts packing information screen 600 that includes an image 602 of the room from which items were taken for packing. It further shows the photos of the items removed from the room 604 and identifies that fifteen items have been packed in user interface icon 608. Figure 6 further depicts the inventory window 610 that can be displayed to the user typically through the collaborative portal 132 or 532. A menu of filters 612 is presented wherein the user can filter on inventory type, the storage status, image information, and other similar information that they can use to sort through their items that are stored away.

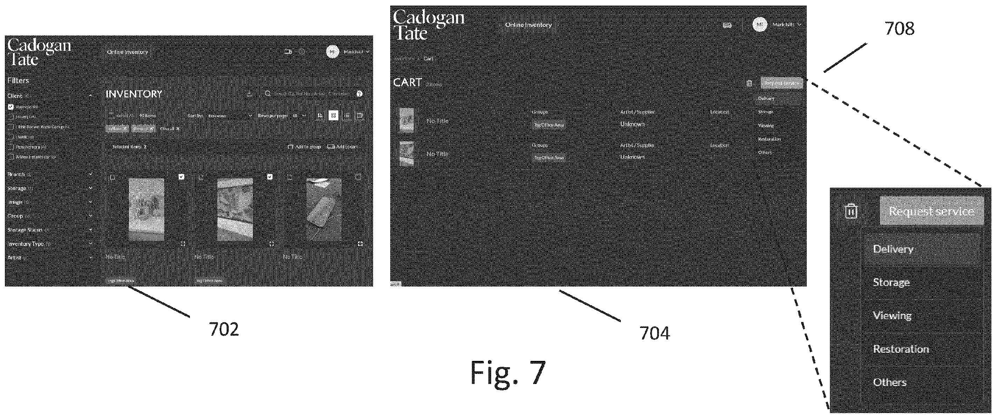

Figure 7 depicts in more detail the filters and the images and the inventory screen 610 depicted in Figure 6. As can be seen, the user typically the owner, will have images of their different items and can get information about the status of that item. Screen 702 shows in more detail the different images and the filters that are employed. Screen 704 shows a further feature wherein the user can use baskets to tell the movers what to do with the items being moved or stored in inventory. **In** the embodiment of Figure 7, the screen 702 can be a screen used by the movers to collect instructions earlier provided by the client while the client was using the consumer portal 132. For example, as shown in figure 7A set of selectable buttons are provided on the left hand side wherein each button is associated, in this embodiment, with a particular client. For example, one button may be associated with the Guggenheim museum, and in the screen 702 of figure 7, that button is selected. Selecting the button for the Guggenheim museum presents to the movers items that are being moved or held in inventory for that client the Guggenheim museum. Along with descriptions of these items, there may also be instructions provided by the client to direct the movers as to where to place or how to store these particular items. In one embodiment, to make things more user friendly for the client, the client is able to store items in baskets, and these baskets can be associated together in formats useful to the client. For example, screen 704 has an icon 708 (shown in the image 704 and in magnified form for ease of illustration) under which the user can request services such as to deliver the item to a second location, to store the item, to send the item for restoration and other different services that can be requested. This allows the user/owner to make requests to the account manager using the portal 132. The user can decide whether to have items shipped, installed, refurbished, or sent to auction or however else they choose to have them handled and managed. Searching can be done on images by using image searches as well as by using the text searches. In this way the portal and the inventory system gives the user real time control over their items.

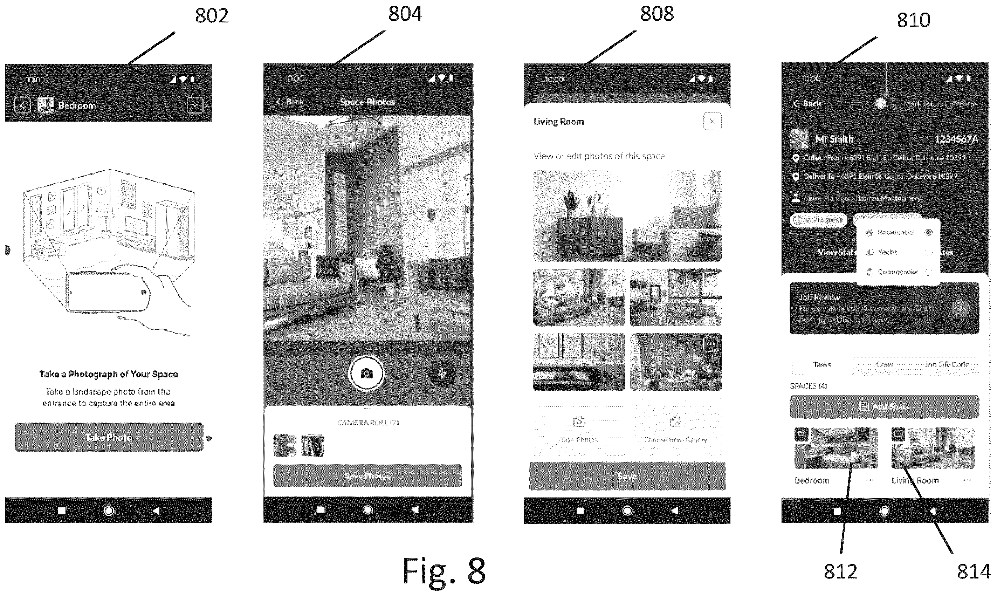

Figure 8 depicts an archived installation reference illustrating a process wherein the moving crew photographs an area to archive its layout. The layout information is stored and may be employed to recreate the layout of the first location. In particular, Fig. 8 depicts that the systems and methods described herein allow for archived Installation References such that before packing items, the crew will photograph an area to archive its layout. When it is time to bring pieces out of storage, the process can call upon these references to easily instruct the crew team how to recreate a space. In particular, Figure 8 depicts that multispace reference photography is captured, then archived and then recalled upon installation. Room and space photography that has been captured during the collection of images at the first location is then automatically retrieved on installation and delivery of items in order to recreate the layout that had been provided or used in the first location. This can allow for easy recreation of a space at the second, different, location. Specifically, Figure 8 depicts images 802, 804, 808 and 810. Each is an image that shows a step in the process of archiving a layout and making it available so that the layout can be recreated at a second different location from the first where the layout was image was taken. In particular, Figure 8 depicts the use of the application 104 to archive a layout and make that layout available for recreating, as best as possible, the original layout in a new different location. Screen 802 depicts an instruction that can be provided by the application 104 to the user to instruct the user for taking a landscape photo of the entrance of the entire area of the room layout. In this case, screen 802 depicts a bedroom and shows pictorially a crew member taking an image of the layout of the room. In practice, the crew member will follow the instruction provided by application 104 and take an image of the room layout. That image is saved as shown in screen 804 and can be sent to the server-side application for storage. In screen 808 it can be seen that the living room which was in this example the room that was captured in the layout image of screens 802 and 804, is recreated in an inventory format to be able to show the user, typically the owner, all the different items that were in that room and the relative location to each other in that room at the first location. Screen 810 then proceeds to show different instructions for collecting items from a particular location and moving them to a different location. In either case the user can see the different spaces and inventory the layouts that were collected and the items that are associated with which each of those rooms such as the bedroom and the living room shown as 812 and 814 and screen 810.

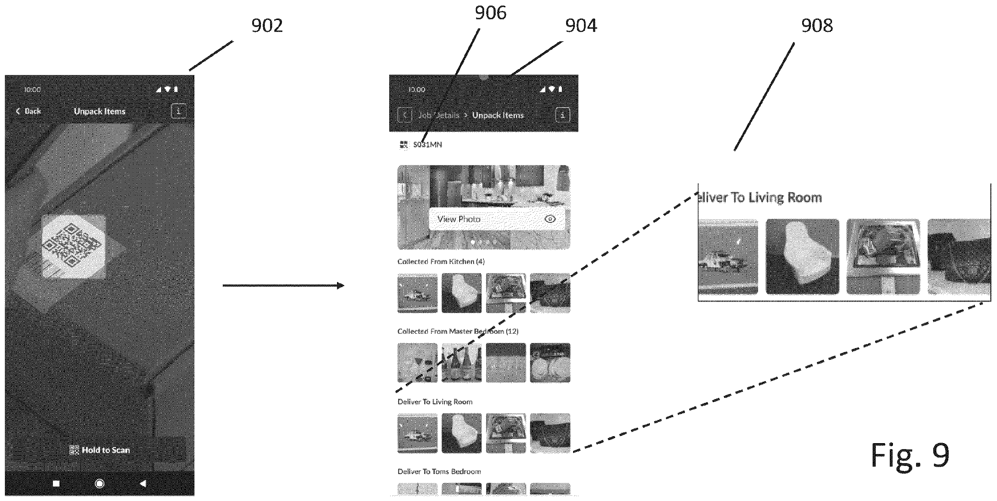

Figure 9 depicts a process for generating moving instructions allowing a user to plan a move using the collaborative portal 132 by generating instructions to the moving crew about specific rooms and areas to place items being moved. The screens 902, 904 and 908 of Figure 9 show the process provided by the systems methods described herein for planning and streamlining a move. Using the systems and methods described herein one can instruct a moving crew on which specific rooms and location to place items that have been collected from a first location. This results in efficient moving days and saves time and adds convenience and avoids inconvenience when it is time to unpack. As generally shown by the screens 902, 904 and 908, one can scan a carton typically by using an app to scan a QR code. The QR code gives information about the room or rooms associated with the items in the carton. In this example the scanned carton indicates that a room, in this case identified by tag 906 as 5031 MN, and identified by the generative AI process 118 as the kitchen, has items and the items collected from that kitchen are shown in more detail as thumbnail images in screen 904. Other images and description note that the carton contains items collected from the Master Bedroom, as well as the Living Room. The items in the carton are presented in images and with text description noting the rooms that items were collected from. Instructions may also be provided to show where the items are to go in the new location.

An example of such a set of images is shown in 908 (shown both within the screen 904 and magnified for ease of illustration) that shows the items in this carton that should be delivered to the living room as specified by the client using the systems and methods described herein. In particular, the thumbnail 908 provides instructions to the crew to deliver certain items within carton associated with the QR code shown in 902, to the living room of the new location. As such, Figure 9 depicts that the systems and methods described herein provide for improved and facile inventory control and movement. In particular, by capturing images of items being moved and the layout of rooms associated with those items, the systems and methods described herein can create QR codes and other instructions that can be applied to cartoons carrying items collected from one location. The QR code can include all the information needed to allow movers at the second location to see what items are in the carton and where those items were collected from and where they should go at the new location.

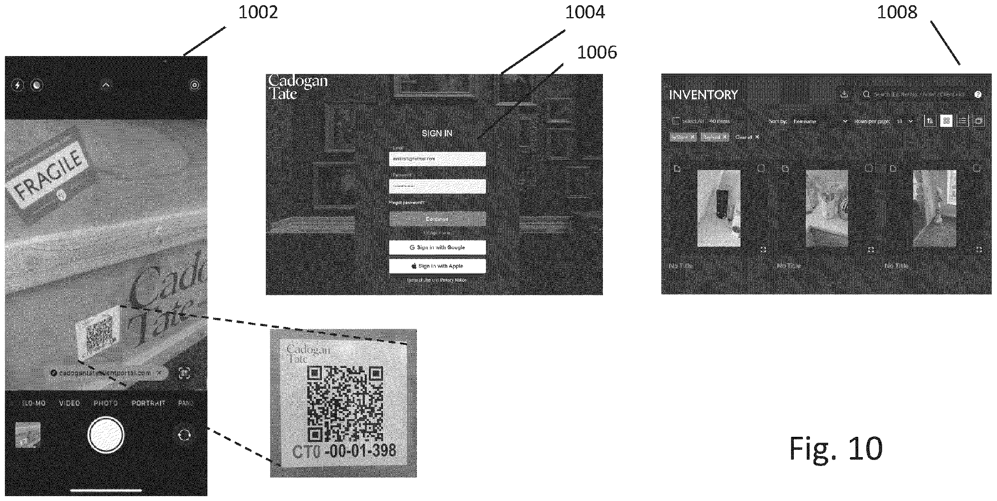

Figure 10 depicts a system and method for virtual create/carton views wherein the process allows a user to digitally view the contents of each carton or crate without unpacking the physical items from the carton or crate, providing a virtual X-ray of the crates. Even after delivery is complete, the systems and methods allow one to "digitally view" the contents of each crate/carton without unpacking the physical items. The system provides a virtual x-ray view of the crate/cartons and thereby helps the user streamline the move even after crew leaves the location. In particular, Figure 10 depicts screen 1002, 1004 and 1008. These three screens represent a process , typically carried out by application 104, for tracking and viewing contents of the cartons or crates without unpacking the items. As shown in screen 1002, one can scan the crate/carton and as shown in this Figure 10, it is done in part by reviewing a QR code that has been generated by the system and applied to a crate. A mobile phone application can be used of the type that uses a camera on a phone to scan the QR code and get the information. That information can be provided after a secure logon screen is navigated such as the secure logon screen depicted in screen 1004. Here in screen 1004 we see a conventional login screen 1006 that has password control and that allows users with the right credentials to get access to the information that is associated with the QR code of screen 1002. Once the login screen 1006 is navigated the systems and methods can provide the screen 1008 that provides photos of the items in the respective carton that was scanned so one can see the items that are actually in that carton and use that information to help determine where best to keep that carton and whether it is worth opening that carton to get a particular item.

Those of skill would further appreciate that the various illustrative logical blocks, modules, circuits, techniques, or method steps of embodiments described herein may be implemented as electronic hardware, computer software, or combinations of both. To illustrate this interchangeability of hardware and software, various illustrative components, blocks, modules, circuits, and steps have been described herein generally in terms of their functionality.

Whether such functionality is implemented as hardware or software depends upon the particular application and design constraints imposed on the overall system. Skilled artisans may implement the described functionality in varying ways for each particular application, but such implementation decisions should not be interpreted as causing a departure from the embodiments described herein. The various illustrative logical blocks, modules, and circuits described in connection with the embodiments disclosed herein may be implemented or performed with a general-purpose processor, a digital signal processor (DSP), an application- specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

Accordingly, it will be understood that the invention is not to be limited to the embodiments disclosed herein and extend to the subject matter of the claims herein.

## Claims

1. An inventory control system for managing the storing and movement of disparate physical items, comprising
an application of the type capable of running on a mobile device having a camera and a user interface that can be accessed by the application;
the application configured to
collect from the camera an image captured by the camera and depicting an item being moved, and
deliver the image to a generative artificial intelligence (AI) process for analyzing the image to create a text description of the image wherein that text description provides a human readable representation of the item;
a database system for building a visual database from the images and generated text descriptions of the items; and
a portal capable of accessing the visual database to provide a user with information about the items being moved.

2. The inventory control system of claim 1, wherein the application is configured to initiate an inventory entry process for having the database system create a record in the visual database for the item being moved upon capture of the image of the item.

3. The inventory control system of claim 1, wherein the mobile device comprises a mobile phone, a tablet computer or a laptop computer.

4. The inventory control system of claim 1, wherein the application is further configured to apply a generative AI process to create a text description of a physical condition of the item being moved.

5. The inventory control system of claim 1, wherein the application is further configured to generate a room layout file representing the layout of a room where the item being moved is located.

6. The inventory control system of claim 1, wherein the application is further configured to record light exposure for the original location of the item being moved.

7. The inventory control system of claim 1, the portal is configured to allow selecting a location in a second room for placing the item being moved.

8. The inventory control system of claim 1, wherein the application is further configured to generate a computer readable code for use as a label for a carton and wherein the computer readable link includes a link to the visual database to allow a user to follow the link to access images of the items in the carton.

9. An inventory control method for managing the storing and movement of disparate physical items, comprising
providing a computer application of the type capable of running on a mobile device having a camera and a user interface that can be accessed by the application;
the application configured to
collect from the camera an image captured by the camera and depicting an item being moved, and
deliver the image to a generative artificial intelligence (AI) process for analyzing the image to create a text description of the image wherein that text description provides a human readable representation of the item;
building a visual database from the images and generated text descriptions of the items; and
providing a portal capable of accessing the visual database to provide a user with information about the items being moved.

10. The inventory control method of claim 9, wherein the application is further configured to initiate an inventory entry process for creating a record in the visual database for the item being moved upon capture of the image of the item.

11. The inventory control method of claim 9, wherein application applies a generative AI process to create a text description of a physical condition of the item being moved.

12. The inventory control method of claim 9, further including generating a room layout file representing the layout of a room where the item being moved is located.

13. The inventory control method of claim 9, further including recording light exposure for the original location of the item being moved.

14. The inventory control method of claim 9, further including allowing a user to use the portal to select a location in a second room for placing the item being moved.

15. The inventory control method of claim 9, further including generating a computer readable code for use as a label for a carton and wherein the computer readable link includes a link to the visual database to allow a user to follow the link to access images of the items in the carton.
